Europäisches Patentamt

European Patent Office

Office européen des brevets

(11) Publication number: **0 282 255**
**A2**

# EUROPEAN PATENT APPLICATION

(21) Application number: 88301974.7

(22) Date of filing: 07.03.88

(51) Int. Cl.⁴: **G05D 23/19** , F24D 19/10 , F24F 11/00

(30) Priority: 07.03.87 GB 8705381

(43) Date of publication of application:
14.09.88 Bulletin 88/37

(84) Designated Contracting States:
BE CH DE LI NL

(71) Applicant: **CAMBRIDGE INSTRUMENTS LIMITED**
**Viking Way Bar Hill**
**Cambridge, CB3 3QM(GB)**

(72) Inventor: **Steer, Clive**
**181 Charterhouse Road**
**Orpington Kent BR6 9ET(GB)**

(74) Representative: **Foster, David Martyn et al**
**MATHISEN MACARA & CO. The Coach**
**House 6-8 Swakeleys Road**
**Ickenham Uxbridge UB10 8BZ(GB)**

(54) Control systems.

(57) A control system for a heating and/or cooling system (2) allows the temperature in a number of distinct spaces to be controlled to different values during different times of the day by providing a selector unit (16) in each of the spaces. The selector unit has a sliding contact potentiometer (20) for each of the sub-periods of the day so that the required temperature can be set. The selector units are connected to a common control unit (10) by a circuit (14) on which signals are transmitted in order to identify which of the preset temperatures is to be compared with the sensed temperature in order to control the source (4) of heating and/or cooling in the space.

*Fig.I.*

EP 0 282 255 A2

# CONTROL SYSTEMS

The present invention relates to control systems for heating or cooling systems, and particularly for central heating and/or air conditioning systems.

Central heating systems which are currently in widespread use typically include a boiler which is connected to supply hot water to a number of radiators distributed throughout a building. A control unit connected to a time clock is used to control the time periods during which the boiler is operative. The boiler is further controlled by a temperature sensor which controls the supply of hot water to the radiators so that the sensed temperature remains within a preset range. Such a system allows the temperature in the vicinity of the sensor to be maintained within the set range during the periods set by the control unit.

Such a system has disadvantages in that the temperature in different areas of the building can vary widely outside the set range due to other factors, such as the amount of space to be heated by a single radiator, and variable amounts of heat loss through doors and windows in each room. This can, to some extent, be overcome by providing each radiator with a thermostatic control valve, which controls the supply of hot water from the central heating system to the radiator in order to maintain the temperature close to the radiator within a preset range. This range is generally determined by setting the valve manually to a physical position which is calibrated to correspond to the average temperature to be achieved in the space heated by that radiator when the boiler is operative. Therefore, if the user requires a different temperature in that space during different parts of the day, he must manually adjust the thermostatic control valve on the radiator.

The present invention is directed to solving the technical problem associated with the provision of a control system which allows sources of heating or cooling in different spaces to be controlled to provide selected temperatures in the various spaces in dependence upon the time of day without the need for repeated manual intervention by the user.

The present invention accordingly provides a control system for a heating and/or cooling system comprising a plurality of sources of heating and/or cooling, at least one of which is located in each of a plurality of spaces, the control system comprising a temperature selector unit associated with each space, a central time clock, and control means operatively connected to each selector unit in order to transmit signals to each selector unit under the control of said clock, each selector unit comprising a sensor for detecting the temperature in its associated space, means for presetting a predetermined number of distinct temperatures to be achieved in said space, means for receiving said signals and, in dependence upon the content of the signal received, selecting one of said preset temperatures, and means for controlling the associated source to be operative or inoperative in dependence upon whether the sensed temperature exceeds or falls below a temperature related to the selected preset temperature.

With such a control system the user may preset a number of different temperatures which are to prevail in each space at different times of day. In this way appropriate temperature variations in a space throughout the day can be preprogrammed in dependence upon the expected use of that space without repeated manual intervention by the user.

When such a control system is used with conventional central heating radiators as the heat sources, each selector unit may control its radiator by means of electrical signals which open or close a valve connecting the radiator to a hot water supply.

In a preferred embodiment the control unit is connected to each selector unit by means of an electrical circuit which provides the power supply for operation of the selector unit as well as enabling transmission of signals.

A control system embodying the invention will now be described, by way of example only, with reference to the accompanying diagrammatic drawings in which:

Figure 1 is a block diagram of the control system and an associated heating system;

Figure 2 is a block diagram of an individual selector unit used in the control system of Figure 1; and

Figure 3 is a plot of voltage against time illustrating one type of signal produced by the control unit.

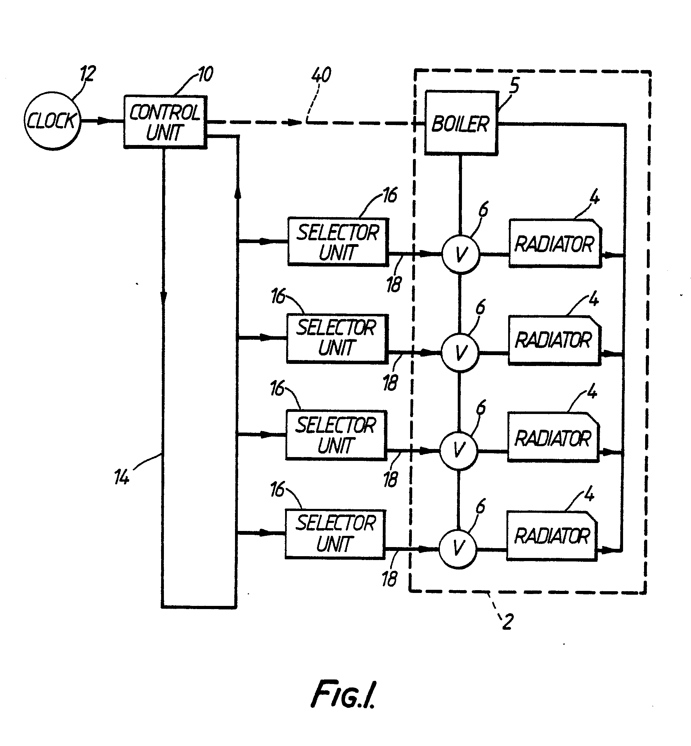

The control system of the present invention may be used to control any of a number of different types of heating and/or cooling systems which include a plurality of distributed sources of heating and/or cooling. In the illustrated example the system is used to control a conventional central heating system 2 in which the individual heat sources are radiators 4 which are supplied with hot water from a boiler 5 via respective valves 6 as illustrated in Figure 1. However, it will be appreciated that the control system to be described may also be used with air conditioning systems or heating systems which use electrical sources of heating or cooling.

The central heating control system shown in Figure 1 comprises a control unit 10 which is connected to a clock 12 which produces regular timing signals. The control unit is used to divide a 24 hour period into several sub-periods. The purpose of the control system to be described is to allow the prevailing temperature in each of a distinct number of spaces, for example the rooms of a house, to be set to different values during each of these sub-periods. For the purposes of the present example, a system which uses four sub-period will be described. However, it will be appreciated that more or less sub-periods could be employed as desired. The boundaries of the sub-periods are preset into the control unit 10. For example, where there are four sub-periods allowed, these could be designated "morning", "day", "evening" and "night" with the start time of the "morning" period being defined as 06:00, the start time of the "day" period as 9:00, the start time of the "evening" period as 16:00 and the start time of the "night" period as 23:00. Each sub-period finishes at the start of the next following sub-period. However, if desired, distinct end times could also be preset into the control unit.

The control unit 10 is connected via a signalling circuit 14 to each of a plurality of selector units 16. The circuit 14 is preferably an electrical circuit which also provides the power supply to the selector units 16. However, a hydraulic or pneumatic signalling circuit could also be used with a separate source of power supply for the selector units.

A selector unit 16 is provided in each space, the temperature of which is to be controlled. For example, in a domestic central heating system, a selector unit could be provided in each room of the house. Each selector unit is not only connected to the circuit 14 but also has an output 18 which is connected to the control valve 6 of the or each associated radiator 4 that heats the space. Although only one radiator is shown as controlled by each selector unit 16, it will be appreciated that the output 18 could control several radiators.

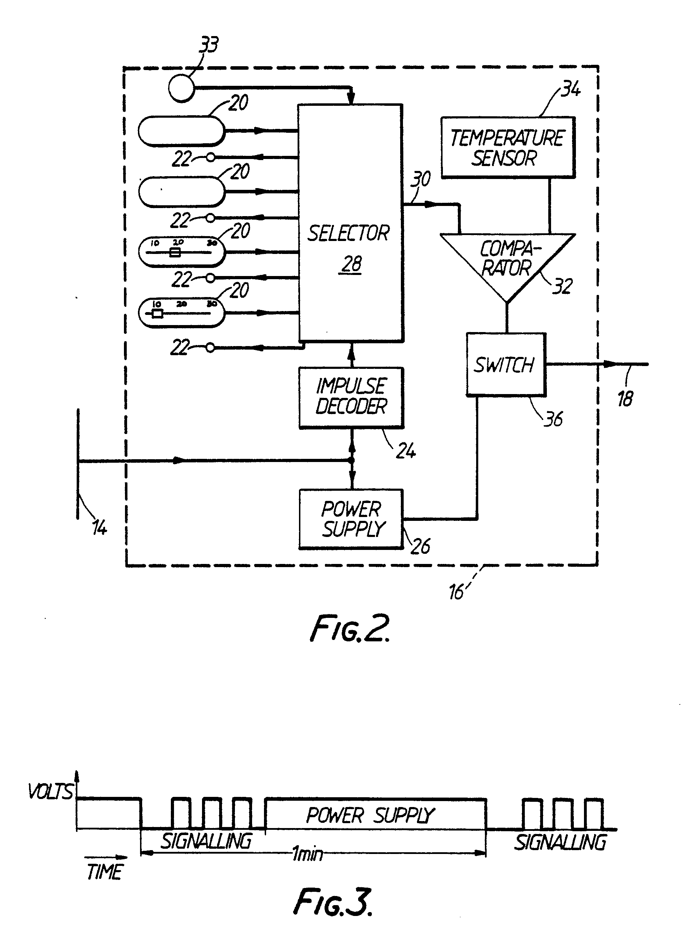

As shown in Figure 2, the selector unit 6 has a panel with four sliding contact potentiometers 20 calibrated in temperatures in order to enable the presetting of a distinct temperature for each sub-period. Each potentiometer has an associated indicator 22, for example an LED, which is illuminated during the sub-period associated with that potentiometer to indicate which temperature setting is in force at any given time.

The signalling circuit 14 is a two-wire cable which is normally connected to a low voltage power source for example that derived via a transformer from a mains supply. The control unit is also capable of momentarily removing the power from this two-wire cable in order to allow a signal to be transmitted. The form of voltage variation in time on the cable 14 is illustrated in Figure 3 and takes the form of alternating power supply and signalling periods. The signal takes the form of a sequence of pulses which convey time information by pulse width modulation. Other forms of pulse coding, such as pulse position coding, could also be used for carrying the signals. The signals are transmitted on the circuit 14 at regular intervals, for example once per minute. In each sub-period the signal transmitted is the same. The two signals illustrated in Figure 3 relate to the fourth sub-period as will be described in more detail later.

In each selector unit 16 the signalling circuit 14 is connected to an impulse decoder 24 and a power supply 26. When the power is connected to the two-wire cable 14, the power supply 26 is used to provide power to all the remaining components of the selector unit and also to store power in, for example a capacitor, so that the power supply to the remaining components of the selector unit can be maintained when power is removed from the two-wire cable while signalling takes place. The capacitor is protected by a diode, which isolates the capacitor when the power supply is removed from the cable 14 for signalling.

The impulse decoder 24 is connected to a selector circuit 28 to which each of the potentiometers 20 is connected, and which has an output 30 connected to one input of a comparator 32. The selector circuit 28 also has outputs connected to each of the indicators 22. The selector circuit 28 operates, under the control of the impulse decoder 24, as a multi-way switch to connect one of the potentiometers 20 to the output 30 and to provide power to the indicator 22 corresponding to the selected potentiometer. A fixed voltage from the power supply 26 is connected across the potentiometer and the sliding contact of each potentiometer is connected to the selector circuit 28.

A booster switch 33 is also connected to the selector circuit 28. The function of the booster switch is to override the operation of the impulse decoder and select whichever of the potentiometers which is set to the highest selected temperature. The booster switch is provided with an indicator to show when it is in operation. A second operation of the switch 33 returns the selector circuit to normal operation under the control of the impulse decoder 24. A time delay circuit is also provided in the selector circuit in order to turn off the booster switch 24 once a predetermined number of signals have been received on the circuit 14. For example the time delay circuit may be set to return the selector circuit to normal operation after 1 hour, that is after receipt of 60 signals at 1 minute intervals.

The selector unit 16 also includes a temperature sensor 34 which produces a voltage output to the other input of the comparator 32. The temperature sensor 34 responds to the temperature in the surrounding space. The output of the comparator 32 is connected to a transistor switch 36, which is connected to the output line 18. The switch is also connected to the power supply so that when the transistor is in a conducting state, power is connected to the valve of each associated radiator so that the valve is opened or held open to allow entry of hot water form the boiler to the radiator. The comparator causes the switch 36 to conduct when the temperature sensed by sensor 34 is lower than the temperature determined by the setting of the selected potentiometer.

The control unit 10 includes means for sensing the current drawn from the signalling circuit 14. Since the power for operating the valve 6 is drawn from the signalling circuit 14, the total current drawn provides an indication to the control unit of the number of valves 6 which are being held open at any time. When the current drawn falls below a predetermined level indicating that no valves are being held open, a control signal is fed by the control unit 10 to the boiler 5 on control line 40 in order to turn off the boiler. When the current drawn rises above the predetermined level, a signal is passed on the line 40 from the control unit to the boiler in order to turn on the boiler again.

The periodic signals transmitted on the signalling circuit 14 comprise a wide pulse, which is interpreted by the impulse decoder 24 as a reset pulse for the selector circuit 28, followed by one or more short setting pulses. The selector circuit 28 functions simply as a switch for providing a voltage set by one of the potentiometers 20 to the output 30. On resetting of the selector circuit 28 the potentiometer 20 corresponding to the first or "morning" period is connected to the output of the potentiometer. The selector circuit steps the output to the next potentiometer for each successive setting pulse received. Therefore, the signal shown in Figure 3 causes the selector circuit to connect the fourth potentiometer corresponding to the "night" sub-period to the output 30. The selector circuit also illuminates the LED 22 corresponding to the selected potentiometer under the control of the signal received from the circuit 14.

The temperature sensor 34 is preferably a temperature sensitive resistor which is used together with a fixed resistor to form a potential divider of which the output voltage is related to the room temperature. The voltage generated by the temperature resistor is arranged to have the same range as that which can be produced by connecting the potentiometers to the power supply. The comparator 32 compares the voltages from the output of the temperature sensor and from the output 30 of the selector circuit in order to determine whether it is necessary to add heat to the room. If the output of the comparator indicates that the room temperature is lower than the selected temperature, the transistor switch 36 is forced into a conducting state, which allows power from the power supply 26 to be output on line 18 to control the valve 6. If the output of the comparator indicates that the room temperature exceeds the selected temperature the switch 36 does not conduct and the valve 6 remains closed.

It will be appreciated that the control system may be used to control both a heating and a cooling system. In this case the output of the comparator 32 is connected to a further transistor switch arranged to conduct when the temperature sensed by sensor 34 exceeds the selected temperature by some amount so that a source of cooling is activated.

It will be appreciated that the selector units described allow temperature to be controlled to different values during distinct sub-periods of the day in a cost effective and simple manner with low power consumption.

## Claims

1. A control system for a heating and/or cooling system comprising a plurality of sources of heating and/or cooling, at least one of which is located in each of a plurality of spaces, the control system comprising a temperature selector unit associated with each space, a central time clock, and control means operatively connected to each selector unit in order to transmit signals to each selector unit under the control of said clock, each selector unit comprising a sensor for detecting the temperature in its associated space, means for presetting a predetermined number of distinct temperatures to be achieved in said space, means for receiving said signals and, in dependence upon the content of the signal received, selecting one of said preset temperatures, and means for controlling the associated source to be operative or inoperative in dependence upon whether the sensed temperature exceeds or falls below a temperature related to the selected preset temperature.

2. A control system according to claim 1, wherein the control means is connected to each selector unit by means of an electrical circuit which provides power supply for operation of the selector units as well as enabling transmission of signals.

3. A control system according to claim 2, wherein the control means further includes means for sensing the power drawn by the selector units in order to provide a control signal when all the sources of heating and/or cooling are inoperative.

4. A control system as claimed in any one of the preceding claims, wherein the presetting means comprise a potentiometer for each of the predetermined number of temperatures.

5. A control system as claimed in any one of the preceding claims, wherein the control means transmits a different signal periodically during each of a predetermined number of time periods.

6. A control system as claimed in any one of the preceding claims, wherein the selecting means comprises a multi-way switch.

7. A control system according to any one of the preceding claims, wherein each selector unit comprises booster means which, when operative force the selecting means to select the highest preset temperature for a predetermined period.

FIG.1.

Fig.2.

Fig.3.